# EUROPÄISCHE PATENTSCHRIFT

(11) **EP 3 041 761 B1**
(45) Veröffentlichungstag und Bekanntmachung des Hinweises auf die Patenterteilung: **10.10.2018**
(21) Anmeldenummer: 14771518.9
(22) Anmeldetag: 25.08.2014
(51) Int. Cl.: B65D 85/804

(54) **EINWEG-KAPSEL UND VERFAHREN ZUR HERSTELLUNG EINER PORTION EINES GETRÄNKES IN EINEM GETRÄNKEAUTOMATEN**
DISPOSABLE CAPSULE AND METHOD FOR PRODUCING A DOSE OF A DRINK IN AN AUTOMATIC DRINKS MACHINE
CAPSULE JETABLE ET PROCÉDÉ DE PRODUCTION D'UNE DOSE DE BOISSON DANS UN DISTRIBUTEUR AUTOMATIQUE DE BOISSONS

(30) Priorität: 02.09.2013 AT 505392013
(43) Veröffentlichungstag der Anmeldung: 13.07.2016
(73) Patentinhaber: pro aqua Diamantelektroden Produktion GmbH & Co KG, 8712 Niklasdorf (AT)
(72) Erfinder: SCHELCH, Michael, A-8600 Oberaich (AT); STABER, Wolfgang, A-8600 Bruck an der Mur (AT); HERMANN, Robert, A-8600 Oberaich (AT); WESNER, Wolfgang, A-1220 Wien (AT)
(74) Vertreter: Vinazzer, Edith
(86) Internationale Anmeldenummer: PCT/EP2014/067992
(87) Internationale Veröffentlichungsnummer: WO 2015/028425

(56) Entgegenhaltungen:
- EP-A1- 1 859 683
- EP-A1- 2 030 914
- WO-A1-02/087400
- WO-A1-2013/156932
- WO-A2-2008/055845
- WO-A2-2013/012971
- DE-A1- 2 004 760
- DE-A1- 3 630 423
- DE-T2- 69 428 084

## Beschreibung

Die Erfindung betrifft eine Einweg-Kapsel zur Herstellung einer Portion eines Getränkes in einem Getränkeautomaten, mit einem Kapselteil, welcher einen Behälter, der die Flüssigkeit, insbesondere Wasser, enthält, und mit einem Kapselteil, welcher einen Behälter, der das zu extrahierende Medium, beispielsweise Kaffee oder Tee, enthält, wobei die beiden Behälter durch eine unter Druck aufbrechbare Membran voneinander getrennt sind. Die Erfindung betrifft ferner ein Verfahren zur Herstellung einer Portion eines Getränkes in einem Getränkeautomaten unter Verwendung einer Einweg-Kapsel mit einem die Flüssigkeit enthaltenden Behälter und einem das zu extrahierende Medium, beispielsweise Kaffee oder Tee, enthaltenden Behälter, wobei die Behälter voneinander durch eine unter Druck aufbrechende Membran getrennt sind.

Eine derartige Kapsel und ein derartiges Verfahren sind beispielsweise aus der DE 2 004 760 A1 bekannt. Die zwischen den beiden Kapselteilen eingebaute Membran wird, sobald das Wasser im oberen Kapselteil auf annähernd 103 °C erhitzt ist, durch den entstehenden Überdruck im Behälter aufgebrochen und hinterlässt eine kreisrunde Öffnung, die den Durchgang des erhitzten Wassers erlaubt. Das erhitzte Wasser durchströmt den Kaffee im unteren Kapselteil und gelangt schließlich in eine Sammelkammer, deren Boden ebenfalls durch den einwirkenden Überdruck geöffnet wird. Die Beheizung wird aufrechterhalten, damit ein entsprechender Druck im oberen Kapselteil bestehen bleibt, der ausreicht, um praktisch alles Wasser daraus zu entfernen. Bei dieser bekannten Kapsel muss daher das Wasser auf eine Temperatur jenseits des Siedepunktes erhitzt werden, da der Dampfdruck dafür verwendet wird, das Wasser durch den mit Kaffee oder Tee gefüllten Behälter zu drücken. Die Beheizung muss so lange aufrechterhalten bleiben, als sich Wasser im Behälter befindet.

Der Erfindung liegt die Aufgabe zugrunde, eine Einweg-Kapsel und ein Verfahren der der eingangs genannten Art zur Verfügung zu stellen, mit der bzw. mit dem sich auf eine einfachere Weise ein heißes oder kaltes Getränk herstellen lässt.

Gelöst wird die gestellte Aufgabe erfindungsgemäß dadurch, dass der die Flüssigkeit enthaltende Behälter derart ausgeführt ist, dass sein Volumen unter äußerer Druckeinwirkung bleibend verringerbar ist, wobei der die Flüssigkeit enthaltende Behälter einen balgartig geformten und daher zusammendrückbaren Mantel oder einen zum Behälterinneren abgedichteten, in Richtung Behälterboden verschiebbaren Deckel aufweist.

Was das Verfahren betrifft wird die gestellte Aufgabe erfindungsgemäß dadurch gelöst, dass das Flüssigkeitsvolumen durch Reduktion des Volumens des die Flüssigkeit enthaltenden Behälters vermindert wird, wobei die Flüssigkeit aus dem Behälter in den und durch den das zu extrahierende Medium enthaltenden Behälter gepresst wird und das Behältervolumen unter äußerer Druckeinwirkung bleibend reduziert wird.

Bei der Erfindung wird im Flüssigkeitsbehälter der Kapsel das Flüssigkeitsvolumen durch äußeren Druck reduziert, sodass die Flüssigkeit durch den das zu extrahierende Medium enthaltenden Behälter hindurchgedrückt wird. Die Flüssigkeit braucht daher, falls ein heißes Getränk hergestellt wird, nur anfänglich erhitzt zu werden. Es kann ferner ein entsprechend hoher Druck ausgeübt werden, wodurch ein optimales Druckströmen des zu extrahierenden Mediums und eine sehr gute Extraktionswirkung erzielt werden. Bei der einen Alternative kann durch äußere Druckeinwirkung der Behälter verformt werden und die Flüssigkeit aus dem Behälter durch das zu extrahierende Medium gepresst werden. Diese Ausführung hat einen einfachen Aufbau und den weiteren Vorteil, dass die benützte Einweg-Kapsel ein besonders kleines Volumen aufweist. Bei der alternativen Ausführungsform weist der die Flüssigkeit enthaltende Behälter einen zum Behälterinneren abgedichteten, in Richtung Behälterboden verschiebbaren Deckel auf. Bei dieser Ausführung wird durch äußeren Druck auf den Deckel das Behältervolumen vermindert und dadurch die Flüssigkeit durch das zu extrahierende Medium gepresst.

Bei einer besonders bevorzugten Ausführung sind die beiden Behälter zylindrisch ausgebildet und zueinander koaxial angeordnet. Eine derart ausgeführte Einweg-Kapsel weist einen besonders geringen Platzbedarf auf und es sind die Druckverhältnisse beim Aufbringen von äußerem Druck besonders günstig.

Für eine gute Extraktionswirkung ist es ferner von Vorteil, wenn der das zu extrahierende Medium enthaltende Behälter eine Querschnittsfläche aufweist, die wesentlich geringer ist, insbesondere ein Fünftel bis ein Zehntel, der größten Querschnittsfläche des die Flüssigkeit aufnehmenden Behälters. Für die Extraktionswirkung ist es darüber hinaus auch günstig, wenn die Erstreckung des das zu extrahierende Medium enthaltenden Behälters in Durchströmrichtung wesentlich größer ist als sein größter Durchmesser.

Die Einweg-Kapsel sollte zur Herstellung von heißen Getränken aus einem temperaturbeständigen Material bestehen, so dass es vorteilhaft ist, wenn zumindest die äußeren Bestandteile der Einweg-Kapsel aus Aluminiumblech hergestellt sind. Bei einer Ausführung des die Flüssigkeit enthaltenden Behälters mit einem balgartig zusammendrückbaren Mantel ist Aluminiumblech besonders gut geeignet.

Die Einweg-Kapsel kann ferner als zu extrahierendes Medium Kaffee, Tee, Kakao, Schokolade oder Suppe jeweils in entsprechender Form, enthalten. Als Flüssigkeit enthält die Einweg-Kapsel Wasser, welches hinsichtlich seiner Zusammensetzung auf das jeweilige Getränk abgestimmt ist, um beispielsweise geschmacklich einwandfreien Tee oder Kaffee herstellen zu können. Das in der Einweg-Kapsel enthaltende Wasser kann darüber hinaus mit Zusätzen zur Beeinflussung des Geschmackes, des Geruches oder des Aussehens des zu erzeugenden Getränkes versehen sein.

Darüber hinaus kann das Wasser Lösungsvermittler, beispielsweise Kuhmilch, Sojamilch oder Alkoholprodukte enthalten. Durch diese Zusätze kann dem erzeugten Getränk eine besondere geschmackliche Note verliehen werden.

Zur Herstellung eines heißen Getränkes wird beim erfindungsgemäßen Verfahren die Flüssigkeit zuerst auf eine Temperatur erhitzt, die vorzugsweise unterhalb des Siedepunktes liegt und insbesondere etwa 85 °C beträgt. Es ist daher beim erfindungsgemäßen Verfahren nicht notwendig, die Flüssigkeit bzw. das Wasser in der Einweg-Kapsel auf eine Temperatur jenseits des Siedepunktes zu erhitzen, da das erhitzte Wasser durch äußere Druckeinwirkung durch das zu extrahierende Medium gedrückt wird.

Mit dem erfindungsgemäßen Verfahren lassen sich ferner, insbesondere wenn spezielle Extraktionsprogramme verwendet werden, die Extraktionsbedingungen auf das jeweils zu extrahierende Medium optimal einstellen. So können beispielsweise die Extraktionsgeschwindigkeit, die Flüssigkeits- bzw. die Extraktionstemperatur und/oder der Druck, mit dem die Flüssigkeit durch das zu extrahierende Medium gedrückt wird, vorzugsweise programmgesteuert, wählbar bzw. regelbar sein.
Weitere Merkmale, Vorteile und Einzelheiten der Erfindung werden nun anhand der Zeichnung, die schematisch Ausführungsbeispiele darstellt, näher erläutert. Dabei zeigen
Fig.1 eine Schnittdarstellung einer Ausführungsvariante einer Einweg-Kapsel gemäß der Erfindung,
Fig. 2 eine weitere Ausführungsvariante einer erfindungsgemäßen Einweg-Kapsel in einer Schnittdarstellung,
Fig. 3 eine Kapselhalterung zum Einsetzen einer erfindungsgemäßen Einweg-Kapsel in einen Getränkeautomaten, beispielsweise eine Espressomaschine, zum Herstellen eines Getränkes und
Fig. 4 eine Schnittdarstellung der in einem Getränkeautomaten positionierten Kapselhalterung.

In der noch folgenden Beschreibung beziehen sich Bezeichnungen wie "oben", "ober-", "unten", "unter-" und dgl. auf die Darstellungen. Die Verwendung der dargestellten Teile kann davon auch abweichend sein.

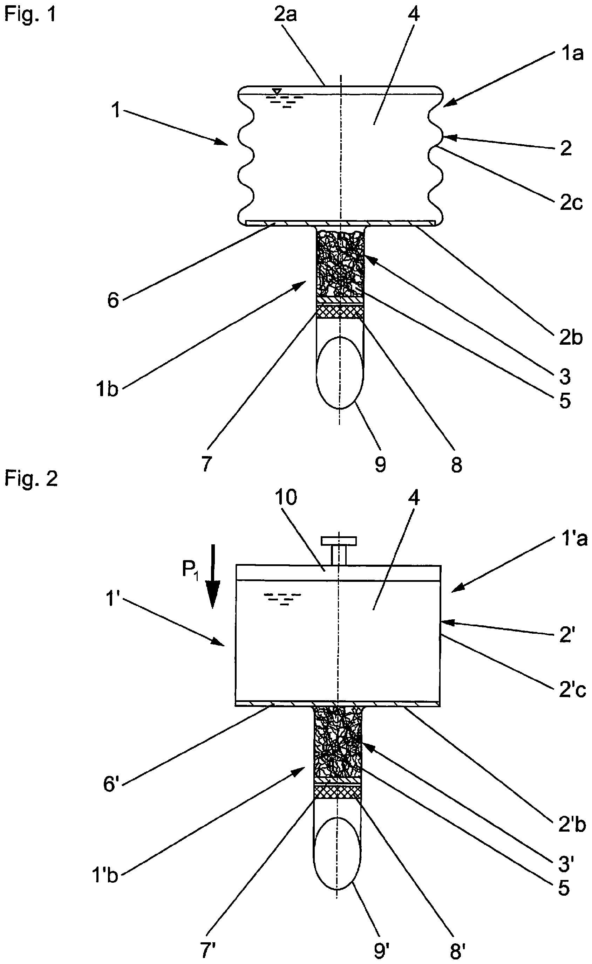

Fig. 1 zeigt den grundsätzlichen Aufbau einer Ausführungsform einer erfindungsgemäßen Einweg-Kapsel 1 zur Herstellung eines Getränkes, wie Kaffee oder Tee, Kakao, Schokolade, Suppe und dergleichen in einem Getränkeautomaten bzw. einer sogenannten Kapselmaschine. Die Kapsel 1 besteht aus einem oberen Kapselteil 1a und einem unteren Kapselteil 1b, die miteinander verbunden sind. Der obere Kapselteil 1a weist einen Behälter 2 auf, welcher mit Flüssigkeit gefüllt ist, der untere Kapselteil 1b weist einen Behälter 3 auf, welcher das zu extrahierende Medium 5 in der für eine Portion Getränk ausreichenden Menge enthält. Tee ist vorzugsweise als getrocknete, gebrochene Teeblätter enthalten, Kaffee in Pulverform. Die Flüssigkeit im Behälter 2 ist vorzugsweises Wasser, beispielsweise weiches, mineralstoffarmes und sauerstoffreiches Wasser. Der mit der Flüssigkeit 4 gefüllte Behälter 2 weist ein wesentlich größeres Volumen und einen wesentlich größeren Durchmesser auf als der das zu extrahierende Medium 5 enthaltende Behälter 3. Bei den in den Figuren gezeigten Ausführungsformen wird ferner der obere Kapselteil 1a vom Behälter 2 gebildet. Die Behälter 2, 3 sind bevorzugt zylindrisch gestaltet und koaxial angeordnet. Der das Medium 5 enthaltende Behälter 3 weist eine Querschnittsfläche auf, die ein Fünftel bis ein Zehntel der größten Querschnittsfläche des die Flüssigkeit 4 aufnehmenden Behälters 2 ist. Bei einer weiteren nicht gezeigten Ausführungsform ist der untere Kapselteil der Kapsel kegelstumpfförmig gestaltet und vom oberen Kapselteil nicht abgesetzt, wobei die spitze Seite die freie Seite ist. Der obere Kapselteil kann eine zylindrische, vom Durchmesser an die breite Seite des Kegelstumpfes angepasste oder ebenfalls eine, insbesondere nur leicht kegelstumpfförmige Gestalt aufweisen.

Der Behälter 2 weist insbesondere ein Volumen von 15 ml bis 150 ml auf, der Behälter 3 insbesondere ein Volumen von 3 ml bis 30 ml. Die beiden Kapselteile 1a, 1b können aus einem dünnen Aluminiumblech oder aus einem Material ähnlicher Eigenschaften hergestellt sein. Der obere Kapselteil 1a weist einen Deckel 2a, einen Boden 2b und einen Mantel 2c auf. Der Boden 2b besitzt mittig eine Öffnung zum Behälter 3, welche mit einer Membran 6 überdeckt ist, die den Boden 2b komplett bedecken kann. Der Mantel 2c ist balgartig zusammendrückbar bzw. faltbar ausgeführt, sodass bei der Herstellung des Getränkes, wie noch beschrieben wird, der Deckel 2a unter äußerer Druckeinwirkung nahezu bis zum Boden 2b bewegt werden kann.

Der das zu extrahierende Medium 5 enthaltende Behälter 3 ist bei der gezeigten Ausführungsform langgestreckt zylindrisch und nach unten von einer zweiten Membran 7 begrenzt, an welche unmittelbar ein Sieb 8 anschließt. Die Membranen 6 und 7 verschließen daher oben und unten den Behälter 3. Der untere Kapselteil 1b ist über den Behälter 3 hinaus verlängert und bildet einen Ausgussteil 9 für das erzeugte Getränk. Die beiden Membranen 6, 7 bestehen aus einem flüssigkeitsdichten Material, welches bei einem Überdruck größer 10 bar aufbricht. Das Sieb 8 ist derart feinmaschig, dass bei geöffneter Membran 7 zwar Flüssigkeit aber kein Medium 5 aus dem Behälter 3 austreten kann. Das Sieb 8 kann ferner zusätzlich an seiner der Membran 5 zugewandten Seite mit kleinen Erhebungen versehen sein, die als Durchstoßkörper dienen und in die Membran eindringen können. Der den Ausgussteil 9 aufweisende Teil wird ferner derart gestaltet, dass das Sieb 8 fixiert bleibt.

Eine weitere Ausführungsform einer Kapsel 1' ist in Fig. 2 gezeigt. Der untere Kapselteil 1'b der Kapsel 1' entspricht dem unteren Kapselteil 1b der in Fig. 1 gezeigten Kapsel 1 und weist daher einen Behälter 3', ein Ausgussteil 9', eine Membran 7' und ein Sieb 8' auf. Der die Flüssigkeit 4 aufnehmende Behälter 2' im oberen Kapselteil 1'a ist analog zur Ausführungsform gemäß Fig. 1 vorzugsweise zylindrisch ausgeführt und weist einen Boden 2'b und einen glatten Mantel 2'c auf. Anstelle eines festen Deckels weist der Behälter einen Stempel 10 auf, welcher gegenüber dem Mantel 2'c abgedichtet ist, aber durch äußeren Druck von oben in Richtung des Pfeiles P1 in Fig. 2 Richtung Boden 2'b bewegbar ist.

Bei beiden Ausführungsformen wird die im Behälter 2, 2' befindliche, beispielsweise erhitzte Flüssigkeit 4 durch das Medium 5 im Behälter 3, 3' durchgedrückt, bei der in Fig. 1 gezeigten Ausführungsform durch Ausüben von Druck auf den Deckel 2c und nachfolgendes Zusammenfalten des Mantels 2c, bei der in Fig. 2 gezeigten Ausführungsform durch ein Bewegen des Stempels 10 in Richtung Boden 2'c. Wie bereits erwähnt bewirkt der ausgeübte Druck ein Aufbrechen der beiden Membranen 6, 7. Der Widerstand, den das Medium 5 der Flüssigkeit im Behälter 3, 3' entgegenbringt, erhöht den Druck im Behälter 3, 3', das Medium 5 wird gut durchströmt und extrahiert.

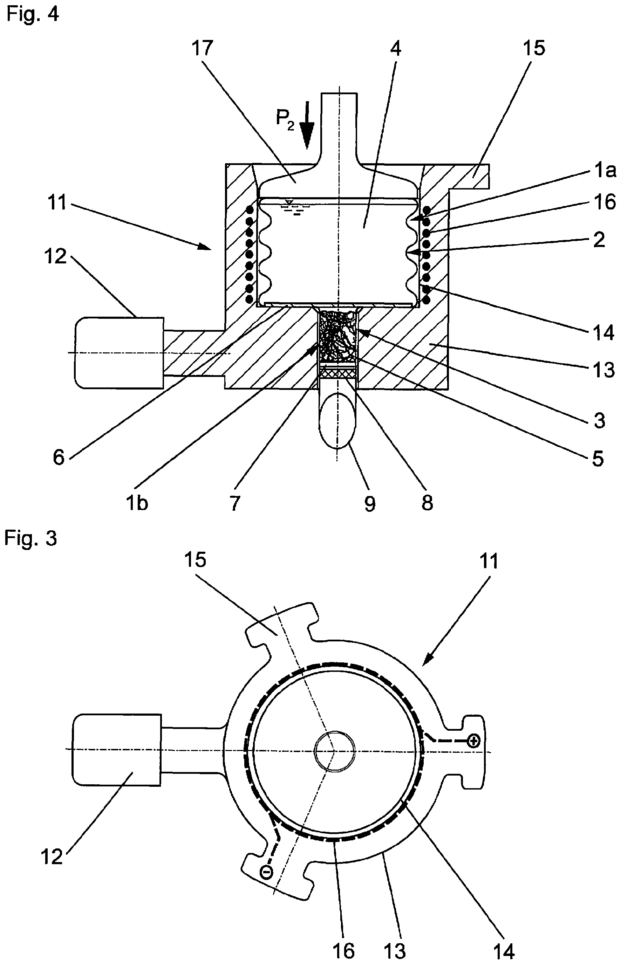

Fig. 3 und Fig. 4 zeigen eine mögliche Ausführungsform von mit einer erfindungsgemäßen Kapsel 1 zusammenwirkenden Bestandteilen eines Getränkeautomaten, dessen weitere, insbesondere herkömmlich ausführbare Bestandteile nicht dargestellt sind. Fig. 3 zeigt eine Ausführungsvariante einer Kapselhalterung 11, welche einen Griff 12 und eine Kapselaufnahme 13 aufweist. Die Kapselaufnahme 13 hat mittig eine im Schnitt (Fig. 4) stufig ausgeführte durchgehende Öffnung 14, in welche die beiden Kapselteile 1a, 1b bzw. 1'a, 1'b der Kapsel 1, 1' im Wesentlichen passgenau einsetzbar sind. An der Peripherie der Kapselaufnahme 13 können mehrere Verriegelungselemente 15, beispielsweise Verriegelungslaschen, vorgesehen sein, sodass die Kapselhalterung 11 im Getränkeautomat in bekannter Weise eingesetzt werden und durch Verdrehen eingerastet werden kann.

In der Kapselaufnahme 13 sind Heizelemente 16, insbesondere Heizdrähte oder dergleichen eingebaut, welche beim ordnungsgemäßen Einrasten der Kapselhalterung 11 im Getränkeautomaten auf nicht gezeigte Weise automatisch elektrisch kontaktiert werden. Beispielsweise durch Betätigen eines nicht gezeigten Schalters am Getränkeautomaten werden die Heizelemente 16 mit elektrischer Spannung versorgt und erhitzen derart durch den Kontakt zwischen der Kapselaufnahme 13 und dem oberen Kapselteil 1a bzw. dem Behälter 3 die Flüssigkeit bzw. das Wasser 4 im Behälter 2. Sobald die Flüssigkeit 4 beispielsweise auf etwa 85 °C erhitzt ist, übt ein Kolben 17 von außen Druck auf den Deckel 2a aus und komprimiert den Behälter 3, sodass die unter Druck gesetzte Flüssigkeit zuerst die Membran 6 und anschließend die Membran 7 aufbricht. Durch die fortschreitende Reduktion des Flüssigkeitsvolumens im Behälter 2 wird mehr und mehr Flüssigkeit durch das Medium 5 im Behälter 3 gedrückt.

Der auf den Deckel 2a des Behälters 2 Druck ausübende Kolben 17 kann elektrisch oder hydraulisch betätigt werden. Alternativ kann eine Betätigung des Kolbens 17 auch über einen am Getränkeautomaten angebrachten Hebel von Hand aus über Muskelkraft erfolgen. Sobald die Getränkeportion fertig hergestellt ist, wird der Kolben 17 nach oben bewegt, die Kapselhalterung 11 am Griff 12 erfasst, durch Drehen entriegelt und aus dem Getränkeautomaten entfernt. Die gebrauchte Kapsel 1 kann aus der Kapselhalterung 11 durch bloßes Kippen bzw. Umdrehen entfernt werden. Für die in Fig. 2 gezeigte Kapsel kann dieselbe Kapselhalterung 11 verwendet werden. Der Kolben 17 bewegt bei dieser Ausführungsform den Stempel 10 entlang des Behältermantels 2'c zum Boden 2'b.

Es ist von Vorteil, im Getränkeautomaten spezielle Extraktionsprogramme für unterschiedliche zu extrahierende Medien 5 vorzusehen. Solche Programme gestatten es, beispielsweise die Geschwindigkeit, mit der das Volumen der Flüssigkeit im Behälter 2, 2' reduziert wird, zu regeln, und zwar auch unabhängig von der Temperatur der Flüssigkeit 4. Extraktionsprogramme können die Extraktionsparameter Druck, Temperatur und Extraktionszeit auf das jeweilige zu extrahierende Medium 5 optimal anpassen. Selbstverständlich ist es auch möglich, eine händische Einstellung dieser Parameter vorzusehen.

Spezielle Extraktionsprogramme erlauben vor allem die Auswahl optimaler Extraktionsbedingungen. Für bestimmte zu extrahierende Medien ist es beispielsweise von Vorteil, wenn in einem ersten Schritt eine Befeuchtung des Mediums bei mäßiger Temperatur erfolgt, ohne dass vorerst ein Extrakt hergestellt wird. Während das zu extrahierende Medium 5 anfänglich noch viele extrahierbare Stoffe enthält, verringert sich deren Konzentration im Laufe des Extraktionsvorganges. Um das zu extrahierende Medium möglichst vollständig zu nutzen, ohne dabei den gebildeten Extrakt zu verdünnen, ist es vorteilhaft, gegen Ende der Extraktion den Druck und/oder die Temperatur zu erhöhen oder zusätzlich bzw. alternativ dazu die Extraktionsgeschwindigkeit zu verringern. Dies ermöglicht die Herstellung hochwertiger extrahierter Getränke bei einem Einsatz einer geringen Menge des zu extrahierenden Mediums. Des Weiteren ist es speziell bei Tee, aber auch bei verschiedenen Kaffeesorten nicht erwünscht, alle enthaltenen Substanzen zu extrahieren, da bei zu hohen Konzentrationen oder zu langen Extraktionsvorgängen, beispielsweise unerwünschte Bitterstoffe in Lösung gehen. So ist es beispielsweise bekannt, dass Grüntee nach zwanzig bis dreißig Sekunden Ziehzeit sein optimales Aroma entwickelt, während viele gerbstoffarmen Schwarzteesorten fünf bis sechs Minuten benötigen, um den vollen Geschmack zu entwickeln. Manche Teesorten, wie zum Beispiel Pu-Erh-Tee, werden bei Extraktionszeiten länger als dreißig Sekunden praktisch ungenießbar.

Zusammenfassend kann daher festgestellt werden, dass es für jedes zu extrahierende Medium 5 oder jede gewünschte Mediumszusammensetzung optimale Extraktionsbedingungen gibt, welche experimentell erarbeitet werden können, sofern es möglich ist, die verschiedenen Extraktionsparameter unabhängig voneinander einzustellen. Diese Möglichkeit wird bei der vorliegenden Erfindung, insbesondere durch die Verwendung spezieller Extraktionsprogramme, eröffnet.

Von besonderem Vorteil bei der vorliegenden Erfindung ist ferner, dass die Flüssigkeit 4, welche zur Extraktion und damit zur Zubereitung des Getränkes benötigt wird, bereits in einem Behälter 2, 2' mitgeliefert wird. Diese Maßnahme ermöglicht die Abstimmung der Flüssigkeit 4 auf das zu extrahierende Medium 5 und zusätzlich kann der Geschmack des erzeugten Getränkes durch eine entsprechende Einstellung und/oder Optimierung der Flüssigkeit 4 beeinflusst und verbessert werden. So ist es beispielsweise bekannt, dass hartes Wasser zur Herstellung von gerbstoffreichen Tees besser geeignet ist, während zur Herstellung von gerbstoffarmen Teesorten ausschließlich sehr weiches Wasser verwendet werden soll.

Durch die Bereitstellung der Flüssigkeit 4 wird ferner Unabhängigkeit vom verfügbaren Leitungswasser erreicht, es muss daher kein Wasser nachgefüllt werden, es ist kein Wasseranschluss erforderlich und es entfällt eine Entkalkung des Getränkeautomaten. Von besonderem Vorteil ist ferner, dass dadurch eine unabhängige und reproduzierbare Qualität des hergestellten Getränkes sichergestellt werden kann. Dadurch wird ferner auch eine bakteriologische und chemische Integrität des Getränkes gewährleistet, was vor dem Hintergrund schwindender Wasserreserven, fragwürdiger Wasseraufbereitungen und Verunreinigungen von Trinkwasser, nicht zuletzt nach Unfällen, technischen Gebrechen oder in Krisengebieten, ein wesentlicher Aspekt sein kann.

Als Flüssigkeit 4 bzw. Extraktionsmedium und Basis für das Getränk kommt in erster Linie qualitativ hochwertiges, optimalen Geschmack sicherstellendes Wasser in Frage. Das Wasser kann aufbereitet werden, um bestimmte Eigenschaften einzustellen, wie beispielsweise die Härte, den Salzgehalt, den pH-Wert und dergleichen. Im Wasser können ferner zur gezielten Beeinflussung des Geschmackes des Getränkes, seines Geruches oder seines Aussehens diverse Zusätze beigemengt werden, wobei vorzugsweise die erlaubten Lebensmittelzusätze, ferner Extrakte von Naturstoffen und dergleichen in Frage kommen. Zur Optimierung der Extraktion können dem Wasser Lösungsvermittler zugesetzt werden. Als Lösungsvermittler kommen beispielsweise Milch und/oder Produkte aus Milch und Soja in Frage. Auch Alkohole können als Lösungsvermittler die Extraktion verbessern. Darüber hinaus können alkoholische Heißgetränke erzeugt werden, wie beispielsweise Tee mit Rum, diverse alkoholische Kaffee- und Kakaospezialitäten und auch Glühwein oder Punsch.

Durch den Einsatz geeigneter Extraktionsmittel in Kombination mit der Möglichkeit, bei beliebiger Temperatur die Extraktion vornehmen zu können, lassen sich mit geeigneten Geräten auch Produkte wie Eistee, Eiskaffee usw. herstellen.

### Bezugsziffernliste

- 1, 1': Kapsel
- 1a, 1'a: oberer Kapselteil
- 1b, 1'b: unterer Kapselteil
- 2, 2': Behälter
- 2a: Deckel
- 2b, 2'b: Boden
- 2c, 2'c: Mantel
- 3, 3': Behälter
- 4: Flüssigkeit
- 5: Kaffee/Tee
- 6, 6': Membran
- 7, 7': Membran
- 8, 8': Sieb
- 9, 9': Ausgussteil
- 10: Stempel
- 11: Kapselhalterung
- 12: Griff
- 13: Kapselaufnahme
- 14: Öffnung
- 15: Verriegelungselemente
- 16: Heizelement
- 17: Kolben
- P1: Pfeil
- P2: Pfeil

## Patentansprüche

1. Einweg-Kapsel (1, 1') zur Herstellung einer Portion eines Getränkes in einem Getränkeautomaten, mit einem Kapselteil (1a, 1'a), welcher einen Behälter (2), der eine Flüssigkeit (4), insbesondere Wasser, enthält, aufweist und mit einem Kapselteil (1b, 1'b), welcher einen Behälter (3, 3'), der ein zu extrahierendes Medium (5) enthält, aufweist, wobei die beiden Behälter (2, 3; 2', 3') durch eine unter Druck aufbrechbare Membran (6, 6') voneinander getrennt sind,
**dadurch gekennzeichnet,**
**dass** der die Flüssigkeit (4) enthaltende Behälter (2) derart ausgeführt ist, dass sein Volumen unter äußerer Druckeinwirkung bleibend verringerbar ist, wobei der die Flüssigkeit (4) enthaltende Behälter (2) einen balgartig geformten und daher zusammendrückbaren Mantel (2c) oder einen zum Behälterinneren abgedichteten, in Richtung Behälterboden (2'b) verschiebbaren Deckel (10) aufweist.

2. Einweg-Kapsel (1, 1') nach Anspruch 1, **dadurch gekennzeichnet, dass** die beiden Behälter (2, 3; 2', 3') zylindrisch ausgebildet sind und zueinander koaxial angeordnet sind.

3. Einweg-Kapsel (1, 1') nach Anspruche 1 oder 2, **dadurch gekennzeichnet, dass** der das zu extrahierende Medium (5) enthaltende Behälter (3, 3') eine Querschnittsfläche aufweist, die ein Fünftel bis ein Zehntel der größten Querschnittsfläche des die Flüssigkeit (4) aufnehmenden Behälters (2, 2') ist.

4. Einweg-Kapsel (1, 1') nach einem der Ansprüche 1 bis 3, **dadurch gekennzeichnet, dass** die Erstreckung des das zu extrahierende Medium (5) enthaltenden Behälters (3, 3') in Durchströmrichtung wesentlich größer ist als sein größter Durchmesser.

5. Einweg-Kapsel (1, 1') nach einem der Ansprüche 1 bis 4, **dadurch gekennzeichnet, dass** der das zu extrahierende Medium (5) enthaltende Behälter (3, 3') an seinem Ende, welches dem die Flüssigkeit (4) enthaltenden Behälter (2, 2') abgewandt ist, mit einer weiteren aufbrechbaren Membran (7, 7') verschlossen ist.

6. Einweg-Kapsel (1, 1') nach einem der Ansprüche 1 bis 5, **dadurch gekennzeichnet, dass** ihre äußeren Bestandteile aus Aluminiumblech bestehen.

7. Einweg-Kapsel (1, 1') nach einem der Ansprüche 1 bis 6, **dadurch gekennzeichnet, dass** sie als zu extrahierendes Medium Kaffee, Tee, Kakao, Schokolade oder Suppe, jeweils in extrahierbarer Form enthält, und dass sie als Flüssigkeit (4) Wasser enthält, welches entweder Zusätze zur Beeinflussung des Geschmackes, des Geruches oder des Aussehens des erzeugten Getränkes enthält oder welchem Lösungsvermittler, beispielsweise Kuhmilch, Sojamilch oder Alkoholprodukte, zugesetzt sind.

8. Verfahren zur Herstellung einer Portion eines Getränkes in einem Getränkeautomaten unter Verwendung einer Einweg-Kapsel (1, 1') mit einem eine Flüssigkeit (4) enthaltenden Behälter (2, 2') und einem ein zu extrahierendes Medium (5) enthaltenden Behälter (3, 3'), wobei die Behälter (2, 2', 3, 3') voneinander durch eine unter Druck aufbrechende Membran (6, 6') getrennt sind,
**dadurch gekennzeichnet,**
**dass** das Flüssigkeitsvolumen durch Reduktion des Volumens des die Flüssigkeit (4) enthaltenden Behälters (2, 2') vermindert wird, wobei die Flüssigkeit (4) aus dem Behälter (2, 2') in den und durch den das zu extrahierende Medium (5) enthaltenden Behälter (3, 3') gepresst wird und das Behältervolumen unter äußerer Druckeinwirkung bleibend reduziert wird.

9. Verfahren nach Anspruch 8, **dadurch gekennzeichnet, dass** zur Herstellung eines heißen Getränkes die Flüssigkeit (4) zuerst auf eine Temperatur unterhalb des Siedepunktes, insbesondere auf eine Temperatur von ca. 85 °C erhitzt wird.

10. Verfahren nach Anspruch 8 oder 9, **dadurch gekennzeichnet, dass** das Behältervolumen unter äußerer Druckeinwirkung reduziert wird.

11. Verfahren nach einem der Ansprüche 8 bis 10, **dadurch gekennzeichnet, dass** die Extraktionsgeschwindigkeit und /oder die Flüssigkeits- bzw. die Extraktionstemperatur und/oder der Druck, mit dem die Flüssigkeit (4) durch das zu extrahierende Medium (5) gedrückt wird wählbar bzw. regelbar ist bzw. sind, wobei vorzugsweise die Regelung der Extraktionsgeschwindigkeit und/oder der Extraktionstemperatur und/oder des Extraktionsdruckes programmgesteuert und auf das jeweilige zu extrahierende Medium (5) abgestimmt durchgeführt wird.

## Claims

1. Disposable capsule (1, 1') for producing a portion of a drink in a drinks dispenser with a capsule part (1a, 1'a), which has a container (2) holding a fluid (4), in particular water, and with a capsule part (1b, 1'b) which has a container (3, 3') holding a medium (5) to be extracted, wherein the two containers (2, 3; 2', 3') are separated from each other by a membrane (6, 6') that breaks under pressure,
**characterised in that**
the container (2) holding the fluid (4) is designed in such a way that its volume can be permanently reduced under the influence of external pressure, wherein the container (2) holding the fluid (4) has a bellows-shaped, and thus compressible sleeve (2c) or a lid (10) that is displaceable in the direction of the container floor (2'b) that is sealed off from the container interior.

2. Disposable capsule (1, 1') according to claim 1, **characterised in that** the two containers (2, 3; 2', 3') are designed cylindrically and are arranged coaxially to each other.

3. Disposable capsule (1, 1') according to claim 1 or 2, **characterised in that** the container (3, 3') holding the medium (5) to be extracted has a cross-section surface that is a fifth to a tenth of the greatest cross-section surface of the container (2, 2') receiving the fluid (4).

4. Disposable capsule (1, 1') according to one of the claims 1 to 3, **characterised in that** the expansion of the container (3, 3') holding the medium (5) to be extracted is substantially greater in the flow direction than its greatest diameter.

5. Disposable capsule (1, 1') according to one of the claims 1 to 4, **characterised in that** the container (3, 3') holding the medium (5) to be extracted is closed at its end that faces away from the container (2, 2') holding the fluid (4) by means of a further breakable membrane (7, 7').

6. Disposable capsule (1, 1') according to one of the claims 1 to 5, **characterised in that** its external components consist of aluminium sheet.

7. Disposable capsule (1, 1') according to one of the claims 1 to 6, **characterised in that** it holds coffee, tea, cocoa, chocolate or soup, each in an extractable form, as the medium to be extracted, and **in that** it holds water as the fluid (4), which contains either additives for influencing the taste, the smell or the appearance of the drink produced, or to which solubilisers, for example cow's milk, soya milk or alcohol products are added.

8. Method for producing a portion of a drink in a drinks dispenser, using a disposable capsule (1, 1') with a container (2, 2') holding a fluid (4) and a container (3, 3') holding a medium (5) to be extracted, wherein the containers (2, 2'; 3, 3') are separated from each other by a membrane (6, 6') that breaks under pressure,
**characterised in that**
the fluid volume is reduced through reduction of the volume of the container (2, 2') holding the fluid (4), wherein the fluid (4) is pressed from the container (2, 2') into the container (3, 3') holding the medium (5) to be extracted and the container volume is permanently reduced under the influence of external pressure.

9. Method according to claim 8, **characterised in that** the fluid (4) is first heated to a temperature below the boiling point, in particular to a temperature of approx. 85°C, for producing a hot drink.

10. Method according to claim 8 or 9, **characterised in that** the container volume is reduced under the influence of external pressure.

11. Method according to one of the claims 8 to 10, **characterised in that** the extraction speed and/or the fluid or the extraction temperature and/or the pressure with which the fluid (4) is pressed through the medium (5) to be extracted is or are selectable or regulatable, wherein the regulation of the extraction speed and/or the extraction temperature and/or the extraction pressure is or are preferably program controllable and is/are carried out adapted to the respective medium (5) to be extracted.

## Revendications

1. Capsule jetable (1, 1') pour la préparation d'une dose d'une boisson dans un distributeur de boissons comportant une partie de capsule (1a, 1'a), qui présente un récipient (2) contenant un liquide (4), notamment de l'eau, et une partie de capsule (1b, 1'b), qui présente un récipient (3, 3') contenant un milieu à extraire (5), les deux récipients (2, 3 ; 2', 3') étant séparés par une membrane (6, 6') pouvant être brisée sous pression, **caractérisé en ce que** le récipient (2) contenant le liquide (4) est réalisé de telle sorte que son volume peut être réduit constamment sous l'action de la pression extérieure, le récipient (2) contenant le liquide (4) présentant une enveloppe (2c) sous forme de soufflet et donc compressible ou un couvercle (10) hermétique par rapport à l'intérieur du récipient et coulissant dans le sens du fond du récipient (2'b).

2. Capsule jetable (1, 1') selon la revendication 1, **caractérisée en ce que** les deux récipients (2, 3 ; 2', 3') sont de forme cylindrique et disposés de manière coaxiale l'un par rapport à l'autre.

3. Capsule jetable (1, 1') selon la revendication 1 ou 2, **caractérisée en ce que** le récipient (3, 3') contenant le milieu à extraire (5) présente une section transversale qui est un cinquième jusqu'à un dixième de la plus grande section transversale du récipient (2, 2') recevant le liquide (4).

4. Capsule jetable (1, 1') selon l'une quelconque des revendications 1 à 3, **caractérisée en ce que** l'extension du récipient (3, 3') contenant le milieu à extraire (5) est nettement plus importante dans la direction de l'écoulement que son plus grand diamètre.

5. Capsule jetable (1, 1') selon l'une quelconque des revendications 1 à 4, **caractérisée en ce que** le récipient (3, 3') contenant le milieu à extraire (5) est fermé par une autre membrane (7, 7') brisable à son extrémité qui fait face du côté opposé au récipient (2, 2') contenant le liquide (4).

6. Capsule jetable (1, 1') selon l'une quelconque des revendications 1 à 5, **caractérisée en ce que** ses composants extérieurs sont en tôle d'aluminium.

7. Capsule jetable (1, 1') selon l'une quelconque des revendications 1 à 6, **caractérisée en ce qu'**elle contient du café, thé, cacao, chocolat ou de la soupe sous forme respectivement extractible comme milieu à extraire, et qu'elle contient de l'eau comme liquide (4) qui contient soit des additifs pour modifier le goût, l'odeur ou l'apparence de la boisson générée, soit auquel est ajouté un solubiliseur tel que du lait de vache, du lait de soja ou des alcools.

8. Procédé pour la préparation d'une dose d'une boisson dans un distributeur de boissons en utilisant une capsule jetable (1, 1') avec un récipient (2, 2') contenant un liquide (4) et un récipient (3, 3') contenant un milieu à extraire (5), les récipients (2, 2', 3, 3') étant séparés par une membrane (6, 6') pouvant être brisée sous pression,
**caractérisé en ce que** le volume du liquide est réduit par réduction du volume du récipient (2, 2') contenant le liquide (4), le liquide (4) contenu dans le récipient (2, 2') étant compressé dans et à travers le récipient (3, 3') contenant le milieu à extraire (5) et le volume du récipient étant réduit constamment sous l'action de la pression extérieure.

9. Procédé selon la revendication 8, **caractérisé en ce que** pour la préparation d'une boisson chaude le liquide (4) est chauffé tout d'abord à une température en dessous du point d'ébullition, notamment à une température de 85 °C environ.

10. Procédé selon la revendication 8 ou 9, **caractérisé en ce que** le volume du récipient est réduit sous l'action de la pression extérieure.

11. Procédé selon l'une quelconque des revendications 8 à 10, **caractérisé en ce que** la vitesse d'extraction et/ou la température du liquide ou d'extraction et/ou la pression, avec laquelle le liquide (4) est compressé à travers le milieu à extraire (5), est/sont sélectionnable(s) ou réglable(s), la régulation de la vitesse d'extraction et/ou de la température d'extraction et/ou de la pression d'extraction étant de préférence commandée par programme et effectuée en fonction du milieu respectif à extraire (5).
